# EUROPEAN PATENT APPLICATION

(11) **EP 3 974 393 A1**
(43) Date of publication of application: **30.03.2022**
(21) Application number: 21198545.2
(22) Date of filing: 23.09.2021
(51) Int. Cl.: C02F 1/44, C02F 1/78, B01D 61/16, B01D 65/08, B01D 71/02, C02F 1/36

(54) **ENHANCED MEMBRANE PERFORMANCE USING OZONE**

(30) Priority: 25.09.2020 US 202063083752 P; 22.09.2021 US 202117448458
(71) Applicant: Ovivo Inc., Montreal, QC H3A 2R7 (CA)
(72) Inventor: SNODGRASS, Michael J, Santa Barbara, CA 93108 (US); TRIVEDI, Hiren K, Cedar Park, TX 78613 (US)
(74) Representative: Murgitroyd & Company

(57) **Abstract**

In a wastewater treatment process or other water treatment process, wherein ceramic membranes are employed to filter liquid not being treated in a biological process, ozone gas is injected and dissolved into the membrane influent for the purpose of preventing fouling of the membranes, while also enhancing pathogen removal. Ozone concentration as injected is at a concentration greater than 2 mg/l, preferably at least about 5 mg/l.

## Description

### Field

The invention is concerned with water or wastewater treatment in which membrane filtration is used, and to reduction of fouling of such membranes.

### Background of the Invention

During filtration of water or wastewater via membranes, in a water or wastewater treatment process, membrane pores may become clogged by particulate matter, organic material, or microorganisms. In a particular plant, once a membrane becomes clogged to the extent that hydraulic capacity is significantly compromised, the system is taken offline and cleaned using a variety of chemicals. This slows down process flow and is a costly maintenance procedure.

It is known that ozone added to water or wastewater in a treatment process can reduce clogging of membranes in that ozone effectively attacks microorganisms, oxidizes organic material, and aids in flocculation of suspended particulate material. However, ozone has been suggested for use in water and wastewater treatment only at very low levels, typically below 2 mg/l. In many cases the ozone was used to treat wastewater prior to or along with biological processes. Although typically not recognized in prior art relating to ozone use, dissolved ozone can attack polymeric filter membranes causing deterioration. Depending on the type of materials used, some polymeric membranes may experience chemical attack by ozone at concentrations as little as 0.5 mg/l.

The following patents and publications have disclosed uses of ozone in treatment of water or wastewater: 5,645,727, 6,027,642, 6,464,877, 6,755,977, 7,309,432, 7,578,939, 7,695,622, 7,867,397, 7,875,179, 8,062,525, 8,628,174, 8,968,569, 9,028,695, 9,352,989, 9,375,663, 10,576,427, 2009/0321354, 2010/0084338, 2013/0126433, 2016/0023166, 2017/0182465, 2017/0313598, 2019/0046930 and 2020/0147556.

### Summary of the Invention

Pursuant to the invention ozone gas is added directly to membrane influent to prevent fouling, in a system for treating water or wastewater. Ceramic membranes are used, as they are inert to the action of ozone. The ozone treatment is applied in a zone or stage of treatment following any biological processes, or in absence of biological processes, since the ozone will kill microorganisms. This can be in treating secondary effluent (post-biological treatment) in a municipal wastewater treatment plant, a combined sewer overflow or sanitary sewer overflow, treatment of surface water, industrial wastewater or ground water. The invention takes a novel approach of proactively preventing membrane clogging, through the addition of ozone directly into the membrane system feedwater.

It has been discovered that the higher the ozone concentration, the more membrane fouling is reduced. Historically, ozone concentrations when added to a membrane feed stream has been intentionally kept low, perhaps <2.0 mg/l. In fact, ozone concentration must be minimal to avoid degradation of polymeric based membranes. However, with newer available membrane materials, particularly silicon carbide, higher ozone concentrations than what has been previously used are now possible.

Ozone dosages just over 2 mg/l (as applied) have proven effective at reducing membrane fouling. With the invention it has been discovered that every increase in ozone concentration reduces the impact of membrane fouling even more. At ozone dosages of 5 mg/l or higher, considerable reduction in membrane fouling is observed. However, even higher dosages between 10-15 mg/l have proven to be considerably effective, resulting in an increase in membrane flux as much as 50% in some cases. Even higher performance is realized when ozone concentrations above 15 mg/l are utilized. In some cases, operation at very high ozone concentrations can eliminate off-line membrane cleaning altogether.

An important consideration when trying to operate at higher ozone dosage rates is the gas transfer system itself. Complete ozone dissolution in feed streams is critical to ensure proper gas transfer while minimizing economic impact. If an inefficient gas transfer system is utilized, it becomes expensive to utilize higher ozone dosages in a membrane system since more ozone is generated than required. Traditional ozone gas transfer systems consist of direct injection devices, such as venturi nozzles, followed by some type of in-line mixing. Contact vessels under pressure are also used to transfer ozone, but consume more space and energy.

Novel gas transfer devices, such as the ROTURI manufactured by UP2E!, increase the gas mass transfer efficiency while operating at atmospheric pressure. The increased transfer efficiency is due to the rotation of liquid within the feed pipe which increases the available surface area for mass transfer to take place. UPZE!'s sonotrodes can be used for further enhancement. By increasing the mass transfer efficiency, it is possible to achieve higher ozone dosage concentrations more efficiently.

The use of ozone addition to membrane feed water is most effective when the membranes are decoupled from a biological process, such as a membrane bioreactor, as ozone is quite effective at killing microorganisms. Suitable feed streams for ozone addition prior to membrane treatment include tertiary treatment in a municipal wastewater treatment plant, combined sewer overflow, sanitary system overflow, industrial wastewater surface water, and even ground water.

In the event membranes become clogged even with the addition of ozone to the membrane system feed water, the clogging effects can be reversed by adding ozone to the membrane backwash at similar concentrations. When used as a cleaning agent by direct injection into the membrane backwash it may be beneficial to apply even higher concentrations, such as >25 mg/l, to clean the membranes from severe clogging issues. Such a process will clean the membrane pores of any clogging, thus restoring membrane hydraulic capacity.

Another important benefit of ozone addition as described above is pathogen removal, especially viruses. Viruses are smaller pathogens than bacteria, which can be removed by ceramic membranes of minimum pore size, i.e. 0.1 to 0.5 micron. The ozone can kill pathogens smaller than 0.1 micron diameter.

It is thus an object of the invention to reduce or eliminate fouling of ceramic membranes in a water or wastewater treatment system, while also increasing pathogen removal, in a stage or zone without biological treatment, using high concentrations of ozone efficiently injected into solution in the membrane system feedwater. Other objects and features of the invention will be apparent from the following description of a preferred embodiment.

### Description of the Drawings

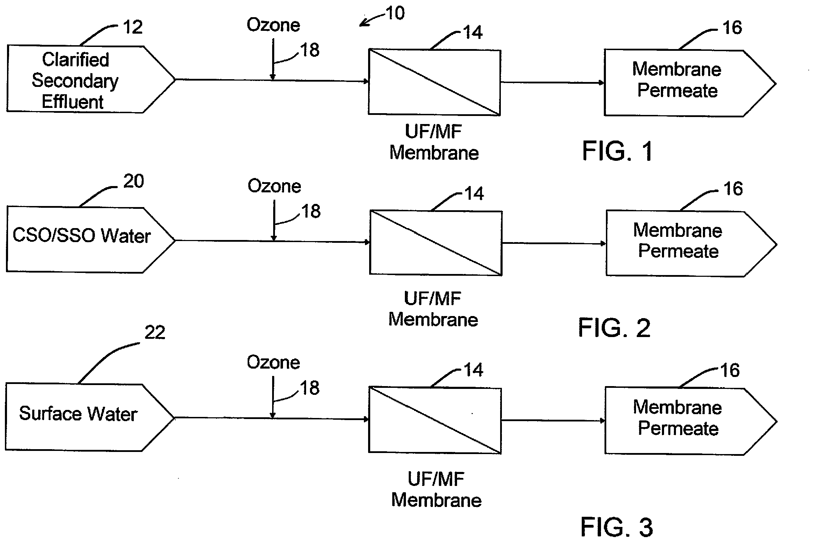

Figures 1, 2 and 3 are diagrams indicating processes of a wastewater treatment plant, with membrane filtration following addition of ozone.

### Description of Preferred Embodiments

In the drawings, Figure 1 indicates a wastewater treatment system 10, illustrating clarified secondary effluent 12 from a liquid side of a wastewater treatment plant which may be of typical design. Wastewater in a municipal treatment plant typically is treated in a series of biological treatment zones, after which the outflow from the zones is subjected to settling in a clarifier, typically called a secondary clarifier. See, for example, Patent No. 6,712,970.

A clarifier effluent exits the clarifier as the clarified effluent 12. At this point biological treatment of the clarified liquid has been completed, and tertiary treatment, in the illustrated example, occurs in a membrane zone 14 which can be a series of tanks. The micropore membranes produce a highly clarified permeate as indicated at 16, removing considerable amount of particulate matter, some very fine, from the liquid. The membranes can also remove much of the bacteria present in the clarified liquid.

Pursuant to the invention the feedwater 12 to the membrane separators is injected with ozone, indicated at 18. As explained above, this ozone gas transfer produces a relatively high applied concentration of ozone to the liquid, greater than 2 mg/l, and preferably at least 5 mg/l. The concentration can be greater than 10 mg/l, or even above 15 mg/l, resulting in greater and greater effectiveness in reducing or eliminating fouling of the membranes. These are doses as applied to the liquid. Residual concentrations after application become lower with time, depending on organic concentration in the influent, biological constituents and site specific conditions. The ozone may be essentially fully reacted when the liquid reaches the membranes, or in some cases may still be at 90% or more of the applied dose. A benefit of the ozone injection, in addition to clogging reduction, is removal of pathogens including viruses.

The gas transfer device employed in the system of the invention preferably is a high efficiency, atmospheric pressure system in which the feedwater flowing through a pipe is rotated as the ozone is injected, producing increased efficiency due to the liquid rotation, which increases available surface efficacy area for mass transfer to take place. For example, a preferred gas transfer system is that referenced above, ROTURI system UP2E! (Eliquo Technologies).

As explained above, with the ozone injection at a relatively high concentration, and with ozone treatment decoupled from any biological process, membrane fouling is very substantially reduced, and in some cases can even be eliminated, so that the membranes operate more efficiently and over a longer period of time without servicing.

Figures 2 and 3 are similar to Figure 1 but show different sources of influent for ozone and membrane treatment. In Figure 2 the source is combined sewage overflow or sanitary sewage overflow 20 which will not be subject to biological treatment. In Figure 3 the source is surface water 22.

## Claims

1. A wastewater treatment system comprising:
ceramic membrane separation decoupled from any biological process; and
an ozone gas injection apparatus positioned to inject and dissolve ozone gas into wastewater, with concentration of ozone dissolved in wastewater, as applied at the injection apparatus, being greater than 2 milligrams per liter, whereby fouling or clogging of ceramic membranes is greatly reduced, while pathogen removal is enhanced.

2. The wastewater treatment system of claim 1, wherein said concentration of ozone is greater than 5 milligrams per liter, preferably greater than 10 milligrams per liter and most preferably greater than 15 milligrams per liter.

3. The wastewater treatment system of claim 1, wherein the ozone gas injection apparatus comprises an atmospheric pressure gas transfer system wherein infeed wastewater liquid is rotated in a pipe at a point at which the ozone gas is injected.

4. The wastewater treatment system of claim 3, wherein the ozone gas injection apparatus is configured to apply high frequency acoustic vibration to the infeed liquid.

5. The wastewater treatment system of claim 1, wherein the system includes primary and secondary treatment, the ceramic membrane separation being downstream of the secondary treatment.

6. A method for reducing or preventing fouling or clogging of ceramic membranes in a water or wastewater treatment system with ceramic membranes, comprising:
injecting ozone gas to the water or wastewater, to an ozone concentration greater than 2 milligrams per liter,
whereby membrane flux is increased and fouling of the membranes is reduced.

7. The method of claim 6, wherein the concentration of dissolved ozone is greater than 5 milligrams per liter, preferably greater than 10 milligrams per liter and most preferably greater than 15 milligrams per liter.

8. The method of claim 6, wherein the water or wastewater treatment system comprises an ozone gas injection apparatus comprising an atmospheric pressure gas transfer system wherein infeed wastewater liquid is rotated.

9. The method of claim 6, wherein the system includes primary and secondary treatment, the ceramic membranes being downstream of the secondary treatment.

10. A method for reducing or preventing fouling or clogging of filtration membranes in a water or wastewater treatment system in which infeed liquid is treated by membrane filtration with ceramic membranes without or after biological treatment of the liquid, comprising:
injecting ozone gas to the infeed liquid before entering membrane filtration, to an ozone concentration greater than 2 milligrams per liter,
whereby membrane flux is increased and fouling of the membranes is reduced, while pathogen content is also reduced.

11. The wastewater treatment system of claim 10, wherein said concentration of ozone is greater than 5 milligrams per liter, preferably greater than 15 milligrams per liter.

12. The method of claim 10, comprising injecting the ozone gas with an atmospheric pressure gas transfer system, wherein infeed wastewater liquid is rotated in a pipe at a point at which the ozone gas is injected.

13. The method of claim 10, wherein said injecting ozone gas further comprises applying high frequency acoustic vibration to the infeed liquid.
